# EUROPÄISCHE PATENTSCHRIFT

(11) **EP 2 878 931 B1**
(45) Veröffentlichungstag und Bekanntmachung des Hinweises auf die Patenterteilung: **17.02.2016**
(21) Anmeldenummer: 14188503.8
(22) Anmeldetag: 10.10.2014
(51) Int. Cl.: G01D 11/24

(54) **Sensor und Verfahren zum wahlweisen Anschließen von zwei unterschiedlichen Seiten**
Sensor and method for selectively connecting two different sides
Capteur et procédé de raccordement sélectif de deux côtés différents

(30) Priorität: 28.11.2013 DE 102013113174
(43) Veröffentlichungstag der Anmeldung: 03.06.2015
(73) Patentinhaber: SICK AG, 79183 Waldkirch (DE)
(72) Erfinder: Anselment, Christoph, 79183 Waldkirch (DE); Burger, Jakob, 77955 Ettenheim (DE)
(74) Vertreter: Hehl, Ulrich

(56) Entgegenhaltungen:
- EP-A2- 2 253 940
- DE-A1-102007 037 759
- DE-C1- 10 119 910

## Beschreibung

Die Erfindung betrifft einen Sensor, dessen Anschluss wahlweise von zwei Seiten zugänglich ist, sowie ein Verfahren zum wahlweisen Anschließen eines Sensors nach dem Oberbegriff von Anspruch 1 beziehungsweise 7.

Zur Erfassung von Informationen aus einem Überwachungsbereich sind diverse Sensorprinzipien bekannt. Eine große Sensorfamilie bilden die optoelektronischen Sensoren, die Licht zur Gewinnung solcher Informationen verwenden. Es werden aber auch andere Wellenlängen, etwa in Radar- oder Mikrowellensensoren, oder andere physikalische Wechselwirkungen genutzt, wie in kapazitiven, induktiven oder auf Ultraschall basierenden Sensoren.

Unabhängig vom Sensorprinzip müssen die Sensoren Anschlüsse bereitstellen, um parametriert zu werden, Messergebnisse auszugeben und nicht zuletzt versorgt zu werden. Da dies in der überwiegenden Zahl der Fälle nicht drahtlos möglich ist, müssen Leitungen an Anschlüsse der Sensoren und von dort ins Innere von deren Gehäuse geführt werden. Das sorgt in manchen Betriebspositionen und Montagesituationen für Schwierigkeiten, weil die Anschlüsse zugänglich bleiben müssen. Ein herkömmlicher Sensor bildet an der Seite oder den Seiten, an denen sich Anschlüsse befinden, keine glatte Fläche und kann deshalb an diesen Seiten nicht bündig an einer Wand oder sonstigen ebenen Montagefläche angebracht werden.

Im Stand der Technik, beispielsweise aus der DE 92 04 623 U, wird vorgeschlagen, den Anschlussbereich in einem drehbaren Eckstück des Sensorgehäuses unterzubringen. Das Eckstück kann wahlweise in zwei unterschiedliche Positionen verdreht werden, in denen sich der Anschluss jeweils auf einer anderen Seitenfläche des Gehäuses befindet. Dadurch kann die Richtung, in die der Anschlussbereich des Sensors zeigt, je nach gewünschter Betriebssituation eingestellt werden. Dabei ist allerdings nur ein einziger Anschluss vorgesehen. Zusätzliche Anschlüsse sind nicht ohne Weiteres möglich, da beispielsweise zwei nebeneinander liegende Kabeldurchführungen des Eckstücks die Drehung blockieren würden. Außerdem entstehen Probleme mit der Abschirmung (EMV), was sowohl Störungen der Signale auf den Anschlussleitungen und damit Störungen des Sensors als auch umgekehrt Störstrahlungen in die Umgebung verursachen kann.

Aus der EP 2 253 940 A2 ist ein optischer Sensor mit einem drehbaren Stecker bekannt, der in wenigstens zwei unterschiedlichen Endlagen mit einem Verriegelungselement lagefixierbar ist.

Die DE 101 19 910 C1 offenbart ein Gehäuse mit einem Drehkörper zur wahlweisen Änderung der Orientierung einer Kabeldurchführung.

In der DE 10 2007 037 759 A1 wird eine Vorrichtung zum Bestimmen einer Schaltstellung eines mechanischen Systems beschrieben, die ein Arretierelement und ein Sensorelement aufweist. In einer Ausführungsform ist ein Stecker über ein Gelenk mit einem Gehäuse des Sensorelements verbunden.

Es ist daher Aufgabe der Erfindung, die Anschlussmöglichkeiten eines Sensors zu verbessern.

Diese Aufgabe wird durch einen Sensor und ein Verfahren zum wahlweisen Anschließen eines Sensors nach Anspruch 1 beziehungsweise 7 gelöst. Die eigentlichen Funktionselemente des Sensors sind in einem Hauptgehäuseteil untergebracht. Das Gehäuse weist außerdem ein zu dem Hauptgehäuseteil relativ bewegliches Anschlussteil auf. Die Erfindung geht dann von dem Grundgedanken aus, an dem Anschlussteil mehrere Anschlüsse unterzubringen, so dass diese Anschlüsse je nach Stellung des beweglichen Anschlussteils von unterschiedlichen Seiten zugänglich sind.

Die Erfindung hat den Vorteil, dass Anschluss und Montage des Sensors erleichtert werden, weil eine Wahl besteht, in welche Richtung die Anschlüsse weisen. Dadurch kann der Sensor mit jeder Gehäuseseite bündig an einer ebenen Fläche montiert werden, ohne dass Anschlüsse oder damit verbundene Leitungen stören. Diese flexible, variable Anschlussmöglichkeit wird mit minimalem Aufwand und Raumbedarf erreicht.

Das Anschlussteil weist bevorzugt eine gemeinsame Durchführung auf, um darin Leitungen von den drei Anschlüssen ins Innere des Gehäuses zu führen. Die Leitungen von den drei Anschlüssen werden dabei in der gemeinsamen Durchführung auf eine Achse zusammengeführt. Das verringert die Anzahl an notwendigen Durchführungen und ermöglicht, das Anschlussteil um die gemeinsame Achse gegenüber dem Hauptgehäuseteil zu verdrehen.

Die gemeinsame Durchführung ist bevorzugt zylindrisch geformt. Dadurch wird ein Verdrehen des Anschlussteils gegenüber dem Hauptgehäuseteil unterstützt, wobei die Mittenachse des Zylinders die Drehachse bildet.

Die gemeinsame Durchführung weist bevorzugt drei voneinander getrennte Kammern auf, um jeweils eine Leitung von einem der drei Anschlüsse zu führen. Die Leitungen sind so auf engem Raum kompakt und trotzdem mit einer sicheren EMV-Kammertrennung geführt. Das verhindert gegenseitige Störungen der Signale auf den Leitungen.

Die gemeinsame Durchführung ist bevorzugt als doppelwandiger Zylinder mit einer ersten Kammer im Inneren und weiteren Kammern als voneinander durch eine Wand getrennte Abschnitte des konzentrisch umlaufenden Bereichs zwischen den beiden Mantelflächen des Doppelzylinders ausgebildet. Eine Leitung verläuft dann zentral auf der Mittenachse des Zylinders. In einer Querschnittsicht bilden die weiteren Kammern einen konzentrischen Kreisring um die erste Kammer, den sie sich insbesondere gleichmäßig teilen. Bei zwei weiteren Kammern beansprucht also jede weitere Kamera vorzugsweise 180° des Kreisrings. Untereinander getrennt sind die weiteren Kammern durch in Höhenrichtung des Zylinders verlaufende Wände, die in der Querschnittsicht auf einem Durchmesser der Kreisfläche des Zylinders jeweils die Doppelwände verbindet.

Die drei Anschlüsse sind bevorzugt in einer Reihe angeordnet. Dadurch sind die Anschlüsse leicht zugänglich, und Kabel können geordnet zum Sensor geführt werden.

Der mittlere Anschluss ist bevorzugt mit einer durch die erste Kammer verlaufenden Leitung verbunden, und die weiteren Anschlüsse sind bevorzugt mit jeweils einer durch jeweils eine weitere Kammer verlaufenden Leitung verbunden. Der nach außen hin mittlere Anschluss wird dabei in der Durchführung mit einer ebenfalls mittigen, zentralen Leitung verbunden. Die weiteren Leitungen befinden sich symmetrisch zu den Seiten der mittigen Leitungen in den um die zentrale erste Kammer ausgebildeten konzentrischen weiteren Kammern.

Die Anschlüsse umfassen bevorzugt einen Versorgungsanschluss und zwei Profinetanschlüsse. Die Versorgung, insbesondere ein Spannungsanschluss, ist vorzugsweise eine Versorgung mit möglichen Schaltein- und ausgängen. Die Profinetanschlüsse werden vorzugsweise in einer Standardgröße ausgeführt, beispielsweise als M12-Anschlüsse. In einer vorteilhaften Anordnung befindet sich der Versorgungsanschluss in der Mitte mit zwei seitlich angeordneten Profinetanschlüssen. Dann umgeben in der Durchführung die Profinetleitungen symmetrisch und konzentrisch in den weiteren Kammern die Versorgungsleitung in der zentralen ersten Kammer. Die Führung in sicheren EMV-Kammern ist bei Profinet besonders vorteilhaft, weil Profinet sonst mit seiner hohen Datenübertragungsrate störanfällig wäre.

Das Gehäuse ist bevorzugt im Wesentlichen quaderförmig ausgebildet, und das Anschlussteil bildet ein drehbares Eckstück des Quaders. Das Gehäuse hat somit eine Vorder- und Rückseite sowie vier Seitenflächen, die jeweils zumindest weitgehend flach ausgebildet sind. Zusätzliche Aufbauten, wie ein Spiegelaufsatz, oder Abrundungen und ähnliche Gestaltungselemente, die von der Quaderform wegführen, sind aber denkbar. Das drehbare Anschlussteil ermöglicht auf besonders einfache Weise, die Anschlüsse von unterschiedlichen Seiten des Gehäuses zugänglich zu machen. So führt beispielsweise eine Drehung um 90° dazu, dass Anschlüsse von einer Seitenfläche zur Vorder-oder Rückseite gedreht werden, während eine Drehung um 180° die Anschlüsse von der rechten oder linken Seitenfläche zur unteren oder oberen Seitenfläche verdrehen.

Das Gehäuse weist bevorzugt eine EMV-Kammer auf, die den Bereich des Anschlussteils von dem übrigen Sensor abschirmt. Das wird beispielsweise durch eine zusätzliche Wand im Gehäuseinneren erreicht. Der Anschlussbereich wird dadurch in beiden Richtungen abgeschirmt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine dreidimensionale Ansicht eines Sensors mit einem nach einer ersten Seite ausgerichteten Anschlussteil;
- Fig. 2: eine dreidimensionale Ansicht des Sensors gemäß Figur 1 mit einem zu einer zweiten Seite verdrehten Anschlussteil;
- Fig. 3: eine dreidimensionale Ansicht des Anschlussteils von außen auf die Anschlüsse;
- Fig. 4: eine Ansicht auf das Anschlussteil gemäß Figur 3 von oben;
- Fig. 5: eine Ansicht auf das Anschlussteil gemäß Figur 3 von innen auf die Durchführung und ihre Kammern; und
- Fig. 6: eine Draufsicht in das offene Gehäuse des Sensors gemäß Figur 1.

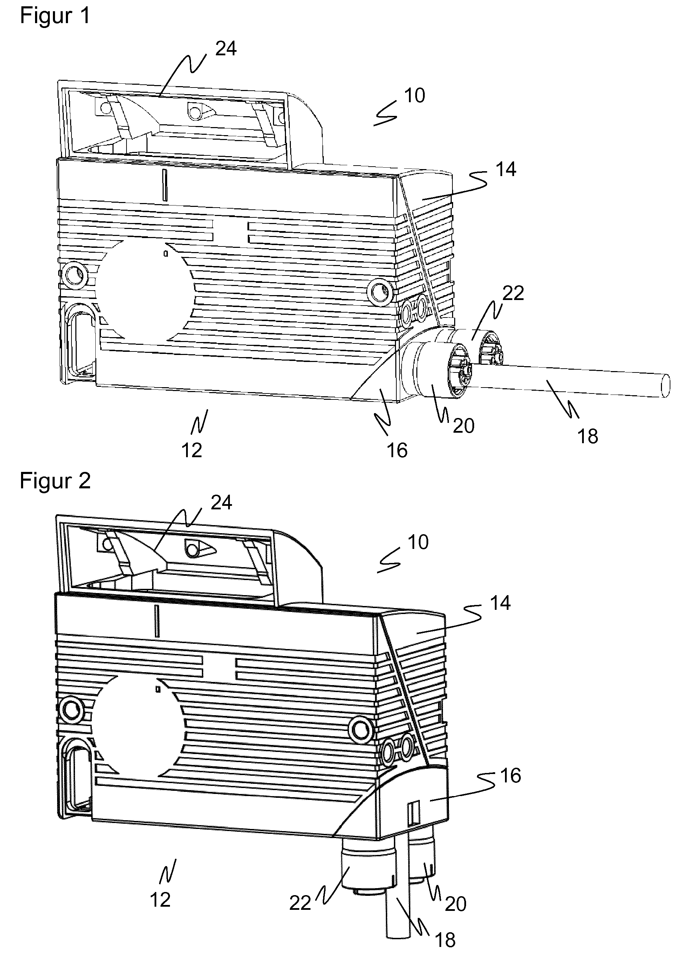

Figur 1 zeigt eine dreidimensionale Ansicht eines Sensors 10, dessen Gehäuse 12 ein Gehäusehauptteil 14 mit den wesentlichen Funktionskomponenten des Sensors 10 und ein Anschlussteil 16 mit drei Anschlüssen 18, 20, 22 aufweist. Bei dem dargestellten Sensor 10 handelt es sich um einen Barcodescanner, dessen Abtaststrahl über einen Spiegel eines Aufsatzes 24 geführt wird. Die Erfindung umfasst aber auch andere Sensoren, beispielsweise kamerabasierte Codeleser mit einem Bildsensor und einer Auswertungseinheit, die in den aufgenommenen Bilddaten Codebereiche identifiziert und decodiert, Kameras zur automatischen Inspektion von Objekteigenschaften oder allgemein optoelektronische Sensoren wie Laserscanner, Lichtgitter, Lichtschranken oder Lichttaster. Denkbar sind auch nicht auf Licht basierende Sensoren, wie beispielhaft einleitend genannt. Auf das jeweilige, an sich bekannte Sensorprinzip soll an dieser Stelle nicht näher eingegangen werden.

Die Anschlüsse 18, 20, 22 dienen dazu, Daten mit dem Sensor 10 auszutauschen und ihn zu versorgen. In der dargestellten Ausführungsform ist der mittlere Anschluss 18 für eine Versorgungsleitung vorgesehen, während die beiden äußeren Anschlüsse 20, 22 M12-Profinetanschlüsse sind. Diese Anordnung und Art der Anschlüsse 18, 20, 22 ist bevorzugt, aber dennoch beispielhaft zu verstehen.

An einem Betriebsort des Sensors 10 können die Anschlüsse 18, 20, 22 sowie die daran angeschlossenen Kabel in der seitlichen Position des Anschlussteils 16 gemäß Figur 1 stören, beispielsweise wenn sich rechts eine Wand befindet. Diese Anordnung und Orientierung der Anschlüsse 18, 20, 22 ist dagegen vorteilhaft, wenn beispielsweise der Sensor mit seiner Unterseite aufliegt.

Das Anschlussteil 16 kann gegenüber dem Gehäusehauptteil 14 verdreht werden, damit die Anschlüsse 18, 20, 22 in eine andere Richtung zeigen. Figur 2 illustriert den Fall nach einer Drehung des Anschlussteils 16 um 180°. Die Anschlüsse 18, 20, 22 zeigen nun nach unten, so dass der Sensor 10 nach rechts hin eine glatte Abschlussfläche bietet. So kann der Sensor 10 beispielsweise in einer Raumecke mit direktem Kontakt zu einer rechts befindlichen Wand montiert werden.

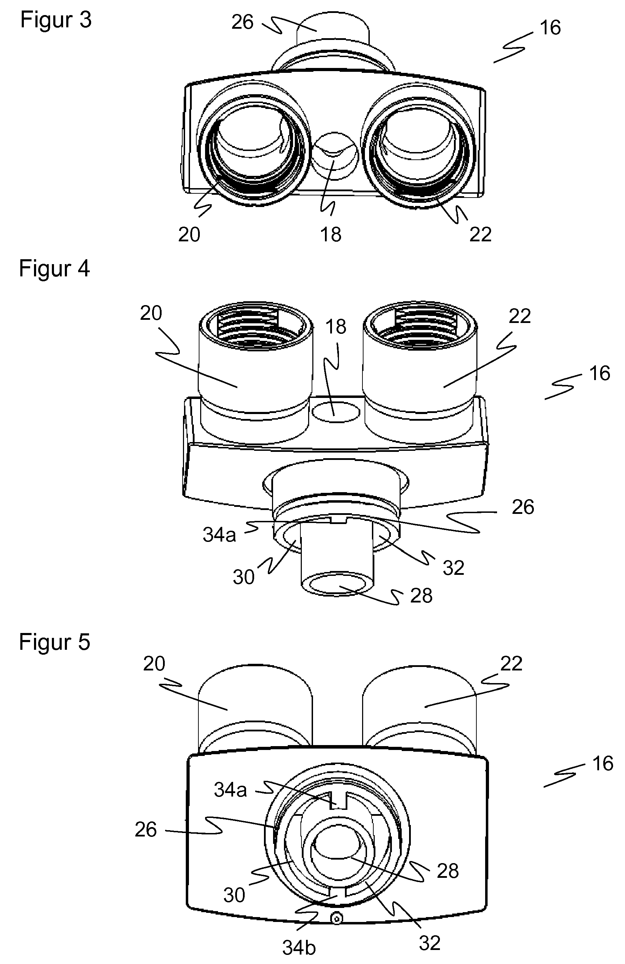

Die Figuren 3 bis 5 stellen das Anschlussteil 16 in einer dreidimensionalen Ansicht dar. Dabei zeigt die Figur 3 eine Sicht von außen auf die Anschlüsse 18, 20, 22, Figur 5 eine Sicht von innen auf eine gemeinsame Durchführung 26 für die Leitungen von den Anschlüssen 18, 20, 22 ins Innere des Sensors 10 und Figur 4 eine Zwischenperspektive, um den Aufbau des Anschlussteils 16 besser zu verstehen.

Das Anschlussteil 16 hat nach außen hin drei kreisrunde Durchführungen 18, 20, 22, die mit den gleichen Bezugszeichen versehen sind wie die entsprechenden daran angeordneten, aber in den Figuren 3 bis 5 nicht dargestellten Anschlüsse 18, 20, 22. Die Durchführungen 18, 20, 22 werden nach innen hin auf eine Achse der gemeinsamen Durchführung 26 geführt.

Die gemeinsame Durchführung 26 ist als Ganzes zylindrisch geformt und legt so die Drehachse für die Verdrehung des Anschlussteils 16 gegenüber dem Gehäusehauptteil 14 fest. In der Darstellung der Figur 5 ist zu erkennen, dass die gemeinsame Durchführung 26 nicht lediglich eine gemeinsame Führung für die Leitungen aller Anschlüsse, sondern zugleich eine Kammertrennung für die einzelnen Leitungen bietet.

Dazu weist die Durchführung 26 insgesamt die Gestalt eines konzentrischen Doppelzylinders auf. Die innere Mantelfläche umgibt eine innere Kammer 28 für eine Leitung des mittleren Anschlusses 18, beispielsweise eine Versorgungsleitung. Zwischen den beiden Mantelflächen entsteht in einer Querschnittsbetrachtung ein konzentrischer Kreisring. Den durch Verschieben des Kreisrings in Höhenrichtung des Zylinders entstehenden Raum teilen sich zu gleichen Teilen zwei weitere Kammern 30, 32 für die Leitungen der äußeren Anschlüsse 20, 22, beispielsweise Profinet-Leitungen. Die weiteren Kammern sind untereinander durch Zwischenwände 34a-b getrennt, die in Höhenrichtung und auf dem Durchmesser der Grundfläche des Zylinders verlaufen.

Das Anschlussteil 16 ermöglicht in einem sehr kompakten Aufbau die verschiedenen Drehpositionen der Anschlüsse 18, 20, 22 beispielsweise gemäß Figuren 1 und 2 und sorgt zugleich für eine sichere EMV-Kammertrennung. Das ist besonders zur Abschirmung der Profinet-Leitungen mit ihren hohen Datenraten von Vorteil.

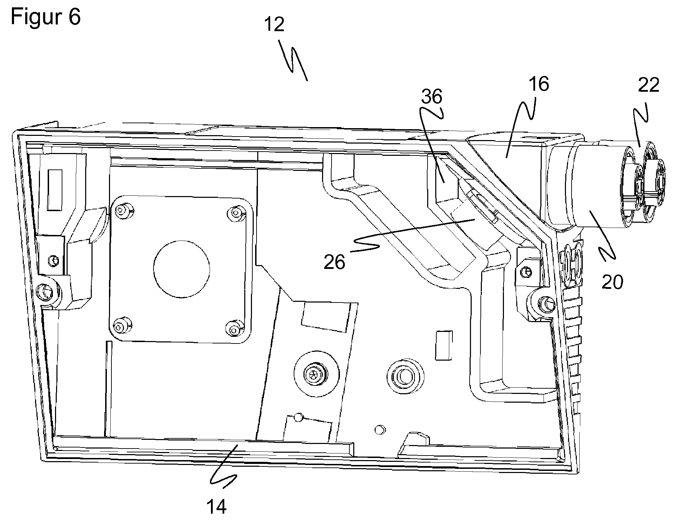

Figur 6 zeigt eine Draufsicht in das offene Gehäuse 12 des Sensors 10. Eine Wand 36 bildet in dem Gehäuse 12 eine Kammer, die den gesamten Anschlussbereich um das Anschlussteil 16 abschirmt. Dadurch werden die Anschlüsse 18, 20, 22 und die in dem Gehäusehauptteil 14 befindlichen Funktionskomponenten für die eigentliche Sensorfunktion voneinander abgeschirmt.

## Patentansprüche

1. Sensor (10), insbesondere optoelektronischer Sensor, mit einem Gehäuse (12), welches ein Hauptgehäuseteil (14) und ein Anschlussteil (16) mit einem Anschluss (18, 20, 22) aufweist, wobei das Anschlussteil (16) an dem Hauptgehäuseteil (14) beweglich angebracht ist, so dass der Anschluss (18, 20, 22) wahlweise von zwei Seiten des Gehäuses (12) zugänglich ist,
**dadurch gekennzeichnet,**
**dass** das Anschlussteil (16) mindestens drei in einer Reihe angeordnete Anschlüsse (18, 20, 22) aufweist und an dem Hauptgehäuseteil (14) derart beweglich ist, dass die mindestens drei Anschlüsse (18, 20, 22) wahlweise von zwei Seiten des Gehäuses (12) zugänglich sind, dass das Anschlussteil (16) eine gemeinsame Durchführung (26) aufweist, um darin Leitungen von den drei Anschlüssen (18, 20, 22) ins Innere des Gehäuses (12) zu führen und dass die gemeinsame Durchführung (26) als doppelwandiger Zylinder mit einer ersten Kammer (28) im Inneren und weiteren Kammern (30, 32) als voneinander durch eine Wand (34a-b) getrennte Abschnitte des konzentrisch umlaufenden Bereichs zwischen den beiden Mantelflächen des Doppelzylinders ausgebildet ist.

2. Sensor (10) nach Anspruch 1,
wobei die gemeinsame Durchführung (26) drei voneinander getrennte Kammern (28, 30, 32) aufweist, um jeweils eine Leitung von einem der drei Anschlüsse (18, 20, 22) zu führen.

3. Sensor (10) nach Anspruch 1 oder 2,
wobei der mittlere Anschluss (18) mit einer durch die erste Kammer (28) verlaufenden Leitung verbunden ist und die weiteren Anschlüsse (20, 22) mit jeweils einer durch jeweils eine weitere Kammer (30, 32) verlaufenden Leitung verbunden sind.

4. Sensor (10) nach einem der vorhergehenden Ansprüche
wobei die Anschlüsse (18, 20, 22) einen Versorgungsanschluss und zwei Profinetanschlüsse umfassen.

5. Sensor (10) nach einem der vorhergehenden Ansprüche
wobei das Gehäuse (12) im Wesentlichen quaderförmig ausgebildet ist und das Anschlussteil (16) ein drehbares Eckstück des Quaders bildet.

6. Sensor (10) nach einem der vorhergehenden Ansprüche
wobei das Gehäuse (12) eine EMV-Kammer aufweist, die den Bereich des Anschlussteils von dem übrigen Sensor (10) abschirmt.

7. Verfahren zum wahlweisen Anschließen eines Sensors (10) mit einem Gehäuse gemäß einem der Ansprüche 1-6 (12) von zwei unterschiedlichen Seiten, insbesondere eines optoelektronischen Sensors, indem ein Anschlussteil (16) des Gehäuses (12) je nach gewählter Seite relativ zu einem Hauptgehäuseteil (14) des Gehäuses (12) bewegt oder in seiner Position belassen wird, so dass ein Anschluss des Anschlussteils (16) von der gewählten Seite her zugänglich wird,
**dadurch gekennzeichnet,**
**dass** der Sensor (10) über drei Leitungen an drei in einer Reihe angeordneten Anschlüssen (18, 20, 22) des Anschlussteils (16) anschließbar ist und dass die drei Anschlüsse (18, 20, 22) beim Bewegen des Anschlussteils (16) relativ zu dem Hauptgehäuseteil (14) von der gewählten Seite zugänglich werden, wobei das Anschlussteil (16) in einer gemeinsamen Durchführung (26) Leitungen von den drei Anschlüssen (18, 20, 22) ins Innere des Gehäuses (12) führt und dazu die gemeinsame Durchführung (26) als doppelwandiger Zylinder mit einer ersten Kammer (28) im Inneren und weiteren Kammern (30, 32) als voneinander durch eine Wand (34a-b) getrennte Abschnitte des konzentrisch umlaufenden Bereichs zwischen den beiden Mantelflächen des Doppelzylinders ausgebildet ist.

## Claims

1. A sensor (10), in particular an optoelectronic sensor, comprising a housing (12), which has a main housing part (14) and a connection part (16) with a connection (18, 20, 22), wherein the connection part (16) is movably attached at the main housing part (14) in such a way that the connection (18, 20, 22) is selectively accessible from two sides of the housing (12), **characterized in that** the connection part (16) has at least three connections (18, 20, 22) arranged in a row and is movable at the main housing part (14) in such a way that the at least three connections (18, 20, 22) are selectively accessible from two sides of the housing (12), **in that** the connection part (16) has a common feedthrough (26) in order to guide lines therein from the at least three connections (18, 20, 22) into the interior of the housing (12) and **in that** the common feedthrough (26) is designed as a double-walled cylinder having a first chamber (28) in the interior and further chambers (30, 32) as sections of the concentrically surrounding region between the two lateral surfaces of the double cylinder, the sections being separated from one another by a wall (34a-b).

2. The sensor (10) in accordance with claim 1,
wherein the common feedthrough (26) has three chambers (28, 30, 32) separate from one another in order to respectively guide a line from one of the three connections (18, 20, 22).

3. The sensor (10) in accordance with claim 1 or 2,
wherein a central connection (18) is connected to a line running through the first chamber (28) and the further connections (20, 22) are each connected to a line respectively running through a further chamber (30, 32).

4. The sensor (10) in accordance with claim 1 or 2,
wherein the at least three connections (18, 20, 22) comprise a supply connection and two Profinet connections.

5. The sensor (10) in accordance with any of the preceding claims,
wherein the housing (12) is of substantially parallelepiped shape and the connection part (16) forms a rotatable edge piece of the parallelepiped.

6. The sensor (10) in accordance with any of the preceding claims,
wherein the housing (12) has an EMC chamber which screens the region of the connection part from the remaining sensor (10).

7. A method for the selective connection of a sensor (10) in a housing (12) according to one of claims 1-6 from two different sides, in particular of an optoelectronic sensor, wherein a connection part (16) of the housing (12) is moved relative to a main housing part (14) of the housing (12) in dependence on the selected side or is left in its position such that a connection of the connection part (16) becomes accessible from the selected side,
**characterized in that** the sensor (10) can be connected via three lines to three connections (18, 20, 22) of the connection part (16) arranged in a row and **in that** the three connections (18, 20, 22) are made accessible from the selected side on a movement of the connection part (16) relative to the main housing part (14), wherein the connection part (16) guides lines in a common feedthrough (26) from the three connections (18, 20, 22) into the interior of the housing (12) and to that end the common feedthrough (26) is designed as a double-walled cylinder having a first chamber (28) in the interior and further chambers (30, 32) as sections of the concentrically surrounding region between the two lateral surfaces of the double cylinder, the sections being separated from one another by a wall (34a-b).

## Revendications

1. Capteur (10), en particulier capteur optoélectronique, comprenant un boîtier (12) qui comprend une partie de boîtier principale (14) et une partie de raccordement (16) avec un raccord (18, 20, 22), dans lequel la partie de raccordement (16) est rapportée mobile sur la partie de boîtier principale (14), de sorte que le raccord (18, 20, 22) est accessible au choix depuis deux côtés du boîtier (12),
**caractérisé en ce que**
la partie de raccordement (16) comprend au moins trois raccords (18, 20, 22) agencés dans une rangée, et est mobile sur la partie de boîtier principale (14) de telle façon que lesdits au moins trois raccords (18, 20, 22) sont accessibles au choix depuis deux côtés du boîtier (12), **en ce que** la partie de raccordement (16) comporte une traversée commune (26), afin de mener dans celle-ci des lignes depuis les trois raccords (18, 20, 21) jusqu'à l'intérieur du boîtier (12), et **en ce que** la traversée commune (26) est réalisée sous la forme de cylindre à double paroi avec une première chambre (28) à l'intérieur et d'autres chambres (30, 32) comme des tronçons, séparés les uns des autres par une paroi (34a-b), de la zone périphérique concentrique entre les deux surfaces enveloppe du double cylindre.

2. Capteur (10) selon la revendication 1,
dans lequel la traversée commune (26) comprend trois chambres (28, 30, 32) séparées les unes des autres, afin de mener respectivement une ligne depuis l'un des trois raccords (18, 20, 22).

3. Capteur (10) selon la revendication 1 ou 2,
dans lequel le raccord central (18) est connecté à une ligne qui s'étend à travers la première chambre (28), et les autres raccords (20, 22) sont connectés respectivement à une ligne qui traverse respectivement une autre chambre (30, 32).

4. Capteur (10) selon l'une des revendications précédentes,
dans lequel les raccords (18, 20, 22) incluent un raccord d'alimentation et deux raccords de type "profinet".

5. Capteur (10) selon l'une des revendications précédentes,
dans lequel le boîtier (12) est réalisé sensiblement sous forme de parallélépipède, et la partie de raccordement (16) forme une pièce de coin rotative du parallélépipède.

6. Capteur (10) selon l'une des revendications précédentes,
dans laquelle le boîtier (12) comprend une chambre de protection électromagnétique "EMV", qui forme un écran pour la région de la partie de raccordement vis-à-vis du reste du capteur (10).

7. Procédé pour le raccordement au choix d'un capteur (10) avec un boîtier (12) selon l'une des revendications 1 à 6 depuis deux côtés différents, en particulier d'un capteur optoélectronique, dans lequel une partie de raccordement (16) du boîtier (12) est, selon le côté choisi, soit déplacée par rapport à une partie de boîtier principal (14) du boîtier (12) soit laissée dans sa position, de sorte qu'un raccord de la partie de raccordement (16) est accessible depuis le côté choisi,
**caractérisé en ce que**
le capteur (10) est susceptible d'être connecté via trois lignes au niveau de trois raccords (18, 20, 22), agencés dans une rangée, de la partie de raccordement (16), et **en ce que** les trois raccords (18, 20, 22) sont accessibles, lors du déplacement de la partie de raccordement (16) par rapport à la partie de boîtier principale (14) depuis le côté choisi, dans lequel la partie de raccordement (16) mène, dans une traversée commune (26), des lignes depuis les trois raccords (18, 20, 22) jusqu'à l'intérieur du boîtier (12) et à cet effet, la traversée commune (26) est réalisée comme un cylindre à double paroi avec une première chambre (28) à l'intérieur, et d'autres chambres (30, 32) sous la forme de tronçons, séparés les uns des autres par une paroi (34a-b) de la zone périphérique concentrique entre les deux surfaces enveloppe du double cylindre.
